# EUROPÄISCHE PATENTSCHRIFT

(11) **EP 1 295 362 B1**
(45) Veröffentlichungstag und Bekanntmachung des Hinweises auf die Patenterteilung: **13.10.2010**
(21) Anmeldenummer: 00954611.0
(22) Anmeldetag: 09.08.2000
(51) Int. Cl.: H01R 4/60, H01R 4/64, F16L 25/00, F16L 11/127

(54) **ELEKTRISCH LEITENDE ROHR- ODER KABELSCHELLE**
ELECTRICALLY CONDUCTIVE PIPE OR CABLE CLIP
BRIDE DE FIXATION ELECTRO-CONDUCTRICE POUR CABLE OU TUYAU

(30) Priorität: 30.06.2000 DE 10031101; 14.07.2000 DE 20012363 U
(43) Veröffentlichungstag der Anmeldung: 26.03.2003
(73) Patentinhaber: Daume Patentbesitzgesellschaft mbH & Co. KG, 30938 Burgwedel (DE)
(72) Erfinder: DAUME, Britta, 30938 Burgwedel (DE)
(74) Vertreter: Wagner, Carsten
(86) Internationale Anmeldenummer: PCT/EP2000/007722
(87) Internationale Veröffentlichungsnummer: WO 2002/003501

(56) Entgegenhaltungen:
- EP-A- 0 982 524
- DE-A- 19 922 856
- US-A- 2 416 063
- US-A- 4 910 832

## Beschreibung

Die Erfindung betrifft eine Einrichtung der im Oberbegriff des Anspruchs 1 genannten Art zum elektrisch leitenden Kontaktieren eines elektrisch leitenden Teiles eines insbesondere länglichen, beispielsweise im wesentlichen zylindrischen Körpers, beispielsweise eines Rohres oder eines Kabels.

Derartige Einrichtungen werden beispielsweise zum Anschluß eines metallischen Rohres oder eines abisolierten Außenleiters eines Koaxialkabels an ein Erdungskabel verwendet.

Durch EP 0 744 788 A1 ist eine Einrichtung zum elektrisch leifender kontaktieren eines Rohres bekannt, die einen Grundkörper zur Anlage an dem zu kontaktierenden Körper und ein an einer in Montageposition dem zu kontaktierenden Körper zugewandten Seite des Grundkörpers gehaltenes Kontaktelement zur Herstellung einer elektrisch leitenden Verbindung mit dem elektrisch leitenden Teil des zu kontaktierenden Körpers aufweist. Bei der bekannten Einrichtung weist der Grundkörper ein Trägerelement in Form einer bandförmigen metallischen Schelle auf, die in elastisches Material eingebettet ist, wobei an der in Montageposition dem zu kontaktierenden Körper zugewandten Seite eine Kontaktfläche für das Kontaktelement freigelassen ist. Das Kontaktelement ist bei der bekannten Einrichtung durch ein Band aus Kupfergeflecht gebildet, das mittels Klebstoffes oder einer Schweißverbindung punktförmig an der Kontaktfläche des Grundkörpers befestigt ist.

Ein Nachteil der bekannten Einrichtung besteht darin, daß das Band aus Kupfergeflecht, das das Kontaktelement bildet, teuer in der Herstellung ist. Ein weiterer Nachteil besteht darin, daß das Band schwierig zu konfektionieren ist. Dies kompliziert und verteuert die Herstellung der Einrichtung weiter.

Ferner ist bei der bekannten Einrichtung nachteilig, daß sich bei Befestigung des Bandes mittels Klebstoffes an der metallischen Schelle die elektrische Kontaktfläche zwischen dem Kontaktelement und der Schelle verringert, da die beiden Teile im Bereich der Klebung elektrisch gegeneinander isoliert sind. Dies erhöht den elektrischen Übergangswiderstand zwischen dem Kontaktelement und der Schelle. Um dem entgegenzuwirken, muß das Kontaktelement eine entsprechend größere Fläche haben, was die Herstellung der bekannten Einrichtung weiter verteuert.

Durch US-A-2 416 063 ist eine Rohrschelle bekannt, an deren Schellenkörper mittels einer Punktschweißverbindung ein Kontaktelement befestigt ist.

Durch EP 0 982 524 A1 ist eine Einrichtung zum elektrisch leitenden Kontaktieren eines elektrisch leitenden Teiles eines insbesondere länglichen, beispielsweise im wesentlichen zylindrischen Körpers, beispielsweise eines Rohres oder eines Kabels, bekannt, die einen schellenartigen Grundkörper aus Metall aufweist, mit dem Kontaktvorsprünge zur Kontaktierung des zu kontaktierenden Teiles einstückig ausgebildet sind.

Durch DE 199 22 856 A ist eine Einrichtung der betreffenden Art bekannt, die einen Grundkörper zur Anlage an dem zu kontaktierenden Körper aufweist, wobei der Grundkörper ein Trägerelement aus Metall aufweist, an dem ein Kontaktelement in Montageposition der Einrichtung anliegt und an dem das Kontaktelement gehalten ist. Die bekannte Einrichtung weist ferner ein an einer in Montageposition dem zu kontaktierenden Körper zugewandten Seite des Grundkörpers gehaltenes separates Kontaktelement zur Herstellung einer elektrisch leitenden Verbindung mit dem elektrisch leitenden Teil des zu kontaktierenden Körpers auf.

Der Erfindung liegt die Aufgabe zugrunde, eine Einrichtung der im Oberbegriff des Anspruchs 1 genannten Art anzugeben, deren Herstellung vereinfacht und damit kostengünstiger gestaltet ist.

Diese Aufgabe wird durch die im Anspruch 1 angegebene Lehre gelöst.

Der Grundgedanke der erfindungsgemäßen Lehre besteht darin, anstelle eines metallischen Geflechtbandes ein Kontaktelement aus profiliertem Blech zu verwenden. Durch diese Lehre ist die Herstellung der erfindungsgemäßen Einrichtung auf überraschend einfache Weise einfacher und damit kostengünstiger gestaltet.

Das Kontaktelement kann beispielsweise aus als Meterware vorgefertigtem profilierten Blech bestehen, das zur Anpassung an eine erforderliche Länge des Kontaktelementes in Abhängigkeit von der Größe der erfindungsgemäßen Einrichtung in einfacher Weise konfektionierbar ist.

Darüber hinaus ist das Kontaktelement aus profiliertem Blech besonders kostengünstig. Dies senkt die Herstellungskosten der erfindungsgemäßen Einrichtung in erheblichem Maße. Das Kontaktelement kann aus einem beliebigen geeigneten Metallblech mit ausreichender elektrischer Leitfähigkeit bestehen, beispielsweise aus Messingblech, Stahlblech, Kupferblech oder einem Blech aus Bronze, einer Kupferlegierung oder Beryllium.

Die Profilierung des Kontaktelementes ist entsprechend den jeweiligen Anforderungen in weiten Grenzen wählbar. Zweckmäßigerweise ist das Kontaktelement im wesentlichen wellenförmig oder mäanderförmig oder zickzackförmig profiliert, wie dies eine Ausführungsform vorsieht. Diese Ausführungsform ist einfach und kostengünstig herstellbar. Aufgrund der im wesentlichen wellenförmigen, mäanderförmigen oder zickzackförmigen Profilierung ist auch bei größeren Bauteiltoleranzen in Montageposition der Einrichtung eine sichere Anlage des Kontaktelementes an dem zu kontaktierenden Körper gewährleistet.

Eine Weiterbildung der vorgenannten Ausführungsform sieht vor, daß die Profilierung des Kontaktelementes aus aufeinanderfolgenden, im Querschnitt runden, bogenförmigen, dreieckförmigen oder trapezförmigen Wellenbergen und Wellentälern besteht. Die Form der Wellenberge und Wellentäler ist hierbei entsprechend den jeweiligen Anforderungen in weiten Grenzen wählbar.

Die Profilierung des Kontaktelementes kann entlang dessen Ausdehnung ungleichmäßig oder nur abschnittsweise gleichmäßig ausgebildet sein. Zweckmäßigerweise ist die Profilierung jedoch im wesentlichen über die gesamte Länge des Kontaktelementes gleichmäßig ausgebildet. Dies erleichtert die Herstellung des Kontaktelementes und bewirkt in Montageposition der Einrichtung einen gleichmäßigen Kontakt zwischen dem Kontaktelement und dem zu kontaktierenden Körper. Beispielsweise ist beim Kontaktieren eines abisolierten Außenleiters eines HF-Kabels in Montageposition der Einrichtung eine in Umfangsrichtung ungleichmäßige Belastung des Außenleiters, die zu unerwünschten Reflexionen eines über das Kabel übertragenen elektrischen Signales führen könnte, aufgrund der in Umfangsrichtung gleichmäßigen Profilierung des Kontaktelementes vermieden.

Eine besonders vorteilhafte Weiterbildung der erfindungsgemäßen Lehre sieht vor, daß das Kontaktelement in Längsrichtung an seinen Enden unprofiliert ist oder an den Enden abgeflacht ist. Dies erleichtert die Montage des Kontaktelementes an dem Grundkörper. Wenn das Kontaktelement mit seinen Enden beispielsweise in taschenförmigen Aufnahmen des Grundkörpers gehalten ist, so ist das Einführen der abgeflachten Enden in die Aufnahmen erleichtert und die Montage des Kontaktelementes an dem Grundkörper damit vereinfacht. Die Montage kann bei dieser Ausführungsform nicht nur von Hand, wie bei Einrichtungen gemäß dem Stand der Technik, sondern grundsätzlich auch maschinell erfolgen.

Zweckmäßigerweise ist das Trägerelement aus Metall im wesentlichen bandförmig ausgebildet. Auf diese Weise kann der Grundkörper biegsam ausgebildet sein.

Eine Weiterbildung der Ausführungsform mit dem Trägerelement und dem elastischen Material sieht vor, daß das Trägerelement fest mit dem elastischen Material des Grundkörpers verbunden ist oder wenigstens teilweise mit dem elastischen Material beschichtet ist, insbesondere auf seiner in Montageposition dem zu kontaktierenden Körper abgewandten Seite, oder in das elastische Material des Grundkörpers eingebettet ist, wobei an der in Montageposition dem zu kontaktierenden Körper zugewandten Seite des Trägerelementes eine Kontaktfläche für das Kontaktelement freigelassen ist. Auf diese Weise ist eine elektrisch leitende Verbindung zwischen dem Trägerelement und dem Kontaktelement hergestellt. In Montageposition ist somit eine elektrisch leitende Verbindung zwischen dem elektrisch leitenden Teil des zu kontaktierenden Körpers und dem Trägerelement gebildet, so daß beispielsweise ein Erdungskabel an das Trägerelement angeschlossen werden kann, um ein metallisches Rohr oder einen abisolierten Außenleiter eines Koaxialkabels zu erden.

Die Profilierung des Kontaktelementes ist in weiten Grenzen wählbar. Eine vorteilhafte Weiterbildung sieht vor, daß durch die Profilierung des Kontaktelementes in einer ersten Richtung des Kontaktelementes , vorzugsweise in dessen Längsrichtung, aufeinanderfolgende Vorsprünge gebildet sind, mit denen das Kontaktelement in Montageposition der Einrichtung an dem elektrisch leitenden Teil des zu kontaktierenden Körpers anliegt, derart, daß zwischen dem elektrisch leitenden Teil des zu kontaktierenden Körpers und dem Trägerelement des Grundkörpers eine elektrisch leitende Verbindung hergestellt ist. Diese Ausführungsform ist einfach und kostengünstig herstellbar. Durch die Vorsprünge ist eine sichere elektrisch leitende Verbindung zu dem zu kontaktierenden Körper hergestellt.

Eine außerordentlich vorteilhafte Weiterbildung der vorgenannten Ausführungsform sieht vor, daß die Vorsprünge zungenartig ausgebildet sind und in Montageposition der Einrichtung zu dem zu kontaktierenden Körper hin vorstehen. Ein besonderer Vorteil dieser Ausführungsform besteht darin, daß die Zungen elastisch verformbar sein können und in Montageposition elastisch federnd an dem zu kontaktierenden Körper anliegen. Aufgrund dieser elastisch federnden Anlage ist in Montageposition auch bei größeren Bauteiltoleranzen oder Materialermüdung stets ein elektrischer Kontakt mit dem zu kontaktierenden Körper sichergestellt.

Bei der vorgenannten Ausführungsform sind die zungenartigen Vorsprünge zweckmäßigerweise einstückig mit dem Blech des Kontaktelementes ausgebildet sind.

Die Bildung der zungenartigen Vorsprünge kann auf beliebige Weise erfolgen. Eine Ausführungsform sieht vor, daß die zungenartigen Vorsprünge aus dem Blech des Kontaktelementes ausgeschnitten, ausgestanzt oder ausgeätzt sind. Dies ermöglicht auf besonders einfache Weise die Bildung der Zungen an dem Kontaktelement.

Die Form der zungenartigen Vorpsprünge ist in weiten Grenzen wählbar. Eine Ausführungsform sieht vor, daß die zungenartigen Vorsprünge in der Draufsicht im wesentlichen dreieckförmig oder trapezförmig ausgebildet sind.

Eine andere Weiterbildung der Ausführungsform mit den zungenartigen Vorsprüngen sieht vor, daß die in der ersten Richtung aufeinanderfolgenden Vorsprünge sich abwechselnd aus dem Bereich gegenüberliegender Ränder des Kontaktelementes in Richtung auf den jeweils anderen Rand erstrecken. Auf diese Weise wird das Kontakelement in Montageposition an seinen gegenüberliegenden Rändern gleichmäßig belastet und gegen das Trägerelement gedrückt.

Die zungenartigen Vorsprünge können sich beispielsweise schräg zu der ersten Richtung erstrecken. Zweckmäßigerweise erstrecken sich die zungenartigen Vorsprünge in der Draufsicht in einer zu der ersten Richtung im wesentlichen senkrechten zweiten Richtung.

Eine andere Weiterbildung der Ausführungsform mit den Vorsprüngen sieht vor, daß das Kontaktelement in Montageposition der Einrichtung mit seinen Vorsprüngen, vorzugsweise abwechselnd, an dem zu kontaktierenden Körper und dem Trägerelement anliegt. Auch bei dieser Ausführungsform ist durch die Vorsprünge eine besonders sichere elektrisch leitende Verbindung zwischen dem zu kontaktierenden Körper und dem Trägerelement, das seinerseits beispielsweise mit einem Erdungskabel verbunden sein kann, hergestellt.

Grundsätzlich kann das Kontaktelement im wesentlichen starr ausgebildet sein. Eine Weiterbildung sieht jedoch vor, daß das Kontaktelement oder wenigstens die Vorsprünge des Kontaktelementes elastisch verformbar ausgebildet ist, derart, daß das Kontaktelement bzw. die Vorsprünge des Kontaktelementes in Montageposition elastisch federnd an dem elektrisch leitenden Teil des zu kontaktierenden Körpers anliegt bzw. anliegen. Bei dieser Ausführungsform ist aufgrund der elastisch federnden Anlage des Kontaktelementes bzw. der Vorsprünge an dem elektrisch leitenden Teil eine besonders sichere elektrisch leitende Verbindung erzielt. Außerdem sind durch die federnde Anlage Bauteiltoleranzen der erfindungsgemäßen Einrichtung und/oder des zu kontaktierenden Körpers ohne weiteres ausgleichbar.

Das Kontaktelement kann jedoch auch lösbar mit dem Grundkörper verbunden sein, wie dies eine andere Ausführungsform vorsieht. Dies erleichtert die Montage und ggf. die Demontage des Kontaktelementes an bzw. von dem Grundkörper.

Eine Weiterbildung der Erfindung sieht vor, daß die Haltemittel wenigstens ein an das elastische Material des Grundkörpers angeformtes Halteteil aus elastischem Material aufweisen, das sich von einem Rand des Kontaktelementes bis zu dem gegenüberliegenden Rand des Kontaktelementes erstreckt, derart, daß das Halteteil das Kontaktelement auf seiner dem Grundkörper abgewandten Seite übergreift und so an dem Grundkörper hält. Bei dieser Ausführungsform erstreckt sich das Halteteil über die gesamte Ausdehnung des Kontaktelementes zwischen dessen gegenüberliegenden Rändern, so daß das Kontaktelement sicher an dem Grundkörper gehalten ist.

Eine außerordentlich vorteilhafte Weiterbildung der Ausführungsformen mit dem Halteteil sieht vor, daß das Halteteil eine im wesentlichen taschenförmige Aufnahme für das Kontaktelement bildet. Bei dieser Ausführungsform wird das Kontaktelement zur Befestigung an dem Grundkörper in die taschenförmige Aufnahme eingeschoben und läßt sich so in einfacher und schneller Weise an dem Grundkörper befestigen.

Bei der vorgenannten Ausführungsform kann das Halteteil eine Ausnehmung aufweisen, die die taschenförmige Aufnahme bildet. Die taschenförmige Aufnahme kann jedoch auch zwischen einander zugewandten Flächend des Halteteiles und des Grundkörpers gebildet sein, wie dies eine andere Ausführungsform vorsieht.

Bei den Ausführungsformen mit der taschenförmigen Aufnahme ist es grundsätzlich ausreichend, wenn eine einzige taschenförmige Aufnahme vorgesehen ist. Eine besonders vorteilhafte Weiterbildung sieht jedoch vor, daß die Haltemittel zwei zueinander beabstandete Halteteile aufweisen, die einander zugewandte taschenförmige Aufnahmen zur Aufnahme gegenüberliegender Enden des Kontaktelementes aufweisen. Bei dieser Ausführungsform sind gegenüberliegende Enden des Kontaktelementes jeweils in einer taschenförmigen Aufnahme aufgenommen, so daß das Kontaktelement besonders sicher an dem Grundkörper gehalten ist.

Eine Weiterbildung der Ausführungsform mit der Ausnehmung sieht vor, daß diese zu dem zugeordneten Ende des Kontaktelementes im wesentlichen komplementär geformt ist. Auf diese Weise ist das Kontaktelement mit seinem Ende bzw. seinen Enden eng und damit fest in der Ausnehmung bzw. den Ausnehmungen gehalten.

Eine andere zweckmäßige Weiterbildung sieht vor, daß die Haltemittel entfernt von der taschenförmigen Aufnahme oder den taschenförmigen Aufnahmen wenigstens einen an das elastische Material des Grundkörpers angeformten Steg aufweisen, an dem das Kontaktelement anliegt. Durch den Steg oder die Stege ist eine zusätzliche Fixierung des Kontaktelementes an dem Grundkörper erreicht und/oder eine Justierung des Kontaktelementes relativ zu dem Grundkörper ermöglicht.

Es ist besonders vorteilhaft, wenn wenigstens zwei Stege vorgesehen sind, an denen das Kontaktelement mit gegenüberliegenden Bereichen seines Randes anliegt. Bei dieser Ausführungsform ist das Kontaktelement zwischen den Stegen gehalten und so gegen Bewegungen in Richtung der Stege gesichert.

Form und Größe des Kontaktelementes sind in weiten Grenzen wählbar. Wenn die erfindungsgemäße Einrichtung zum Kontaktieren eines länglichen, beispielsweise im wesentlichen zylindrischen Körpers dient, ist es zweckmäßig, daß das Kontaktelement, das sich dann in Montageposition in Umfangsrichtung des zu kontaktierenden Körpers erstreckt, langgestreckt ausgebildet ist.

Bei der Ausführungsform mit dem langgestreckten Kontaktelement und den taschenförmigen Ausnehmungen ist das Kontaktelement zweckmäßigerweise in Längsrichtung an seinen Enden in den taschenförmigen Ausnehmungen aufgenommen, wie dies eine Weiterbildung vorsieht. Beim Kontaktieren eines zylindrischen Gegenstandes, beispielsweise eines Kabels, ist das Kontaktelement somit in Umfangsrichtung an seinen Enden in den taschenförmigen Ausnehmungen fixiert.

Falls beispielsweise beim Kontaktieren eines Kabels nicht nur in Umfangsrichtung eine Fixierung des Kontaktelementes erforderlich ist, sondern auch in Axialrichtung des Kabels, so ist es bei der Ausführungsform mit dem Steg oder den Stegen zweckmäßig, wenn das Kontaktelement an einer seiner Längskanten bzw. dessen beiden Längskanten an dem Steg bzw. den Stegen anliegt.

Grundsätzlich kann der Grundkörper im wesentlichen starr ausgebildet sein. Zweckmäßigerweise ist er jedoch biegsam ausgebildet. Dies erleichtert die Montage der erfindungsgemäßen Einrichtung an dem zu kontaktierenden Körper, insbesondere einem Rohr oder einem Kabel.

Form und Größe des Grundkörpers sind in weiten Grenzen wählbar. Zum Kontaktieren eines plattenförmigen Körpers kann der Grundkörper beispielsweise plattenförmig und zum Kontaktieren eines gebogenen oder gekrümmten Körpers gebogen oder gekrümmt ausgebildet sein.

Eine insbesondere zur Kontaktierung von Rohren oder Kabeln beliebigen Querschnitts vorteilhafte Weiterbildung sieht vor, daß der Grundkörper derart ausgebildet ist, daß er in Montageposition den zu kontaktierenden Körper ringförmig oder muffenförmig umgreift. Bei dieser Ausführungsform umspannt der Grundkörper den zu kontaktierenden Körper und ist so sicher an diesem gehalten.

Der Grundkörper kann mehrteilig ausgebildet sein. Bei einer zur Kontaktierung eines Rohres vorgesehenen erfindungsgemäßen Einrichtung kann der Grundkörper beispielsweise aus mehreren, in Umfangsrichtung des zu kontaktierenden Rohres aufeinanderfolgenden Teilen bestehen, beispielsweise aus zwei halbringförmigen Teilen. Zweckmäßigerweise ist der Grundkörper jedoch einteilig und in Umfangsrichtung offen ausgebildet und weist an seinen freien Enden abgewinkelte oder abgebogene Laschen auf, die in Montageposition miteinander verbindbar sind, vorzugsweise mittels einer Schraubvorrichtung oder einer Klemmvorrichtung. Bei dieser Ausführungsform ist aufgrund der einteiligen Ausbildung des Grundkörpers die Montage der erfindungsgemäßen Einrichtung an dem zu kontaktierenden Körper besonders einfach gestaltet.

Eine andere Weiterbildung sieht vor, daß der Grundkörper als um den zu kontaktierenden Körper spannbare Schelle ausgebildet ist. Dies erleichtert die Montage weiter.

Ferner sieht eine Weiterbildung der Ausführungsformen mit dem Trägerelement und dem elastischen Material vor, daß das Metallteil wenigstens einen Durchbruch, vorzugsweise beiderseits des Kontaktelementes wenigstens einen Durchbruch aufweist, durch den bzw. durch die sich das elastische Material erstreckt, derart, daß das elastische Material auf der dem Kontaktelement zugewandten Seite des Metallteiles mit dem elastischen Material auf der dem Kontaktelement abgewandten Seite des Metallteiles verbunden ist. Auf diese Weise ist bei Ausführungsformen, bei denen das Kontaktelement lösbar mit dem Grundkörper verbunden ist, ein Abheben des Kontaktelementes von dem Trägerelement vermieden.

Um ein Eindringen von Luft und/oder Feuchtigkeit in den Bereich der Kontaktierung zu verhindern, sieht eine Weiterbildung vor, daß die Einrichtung Dichtmittel zum Abdichten eines in Montageposition zwischen dem zu kontaktierenden Körper und dem Grundkörper gebildeten Raumes gegen ein Eindringen von Luft und/oder Feuchtigkeit aufweist.

Eine vorteilhafte Weiterbildung der Ausführungsform mit den Dichtmitteln sieht vor, daß die Dichtmittel an einer in Montageposition dem zu kontaktierenden Körper zugewandten Seite des Grundkörpers angeordnete, quer zur Längsrichtung des Grundkörpers bzw. in dessen Axialrichtung zueinander beabstandete Dichtlippen aus elastischem Material aufweisen, die sich in Längsrichtung des Grundkörpers bzw. in dessen Umfangsrichtung erstrecken, vorzugsweise im wesentlichen über die gesamte Länge des Grundkörpers in dieser Richtung, und die in Montageposition der Einrichtung dichtend an dem zu kontaktierenden Körper anliegen. Diese Ausführungsform ist einfach im Aufbau und ermöglicht in zuverlässiger Weise eine Abdichtung des Kontaktbereiches.

Bei der Ausführungsform mit den Haltemitteln und den Dichtlippen sind die Haltemittel zweckmäßigerweise an die Dichtlippen angeformt, was die Herstellung weiter vereinfacht.

Eine andere Weiterbildung sieht vor, daß der Grundkörper im wesentlichen vollständig aus dem elastischen Material besteht. Bei dieser Ausführungsform ist ein separates Trägerelement nicht mehr erforderlich, so daß der Aufbau der erfindungsgemäßen Einrichtung weiter vereinfacht ist. Es ist auch möglich, daß das Kontaktelement selbst das Trägerelement bildet.

Gemäß einer anderen Ausführungsform kann das Kontaktelement fest mit dem elastischen Material des Grundkörpers verbunden sein.

Eine andere außerordentlich vorteilhafte Weiterbildung der Ausführungsform mit dem elastischen Material sieht vor, daß das elastische Material des Grundkörpers auf seiner dem Kontaktelement zugewandten Seite eine Anlagefläche für das Kontaktelement aufweist, die zu dem Kontaktelement im wesentlichen komplementär geformt ist, derart, daß das Kontaktelement im wesentlichen über seine gesamte Länge an dem elastischen Material des Grundkörpers anliegt. Auf diese Weise ist in Montageposition der Einrichtung eine besonders sichere Anlage des Kontaktelementes an dem elektrisch leitenden Teil des zu kontaktierenden Körpers erzielt. Das elastische Material des Grundkörpers bewirkt ferner eine elastisch federnde Anlage des Kontaktelementes an dem elektrisch leitenden Teil des zu kontaktierenden Körpers.

Bei der vorgenannten Ausführungsform kann das Kontaktelement auf beliebige geeignete Weise mit dem elastischen Material des Grundkörpers verbunden sein. Beispielsweise kann das Teil aus elastischem Material aus einem extrudierten Bandmaterial bestehen, mit dem das Kontaktelement verbunden ist. Eine vorteilhafte Weiterbildung sieht jedoch vor, daß das Kontaktelement mit dem elastischen Material des Grundkörpers umspritzt ist. Diese Ausführungsform ist einfach und kostengünstig herstellbar. Außerdem ist bei dieser Ausführungsform sichergestellt, daß die Anlagefläche des Grundkörpers zu der Profilierung des Kontaktelementes komplementär geformt ist.

Eine Weiterbildung der Ausführungsform mit dem einteiligen Grundkörper und den Laschen sieht vor, daß sich das Kontaktelement bis in die Laschen er-streckt. Bei dieser Ausführungsform kann beispielsweise ein Erdungskabel elektrisch leitend mit den Laschen verbunden werden, so daß über das Kontaktelement eine elektrisch leitende Verbindung zwischen dem Erdungskabel und dem elektrisch leitenden Teil des zu kontaktierenden Körpers, beispielsweise einem abisolierten Außenleiter eines Koaxialkabels, hergestellt ist.

Eine andere Weiterbildung der erfindungsgemäßen Lehre sieht vor, daß das elastische Material des Grundkörpers und/oder der Dichtlippen durch ein Elastomer, insbesondere vulkanisierten Kautschuk und/oder ein thermoplastisches Elastomer, gebildet ist.

Die Erfindung wird nachfolgend anhand der Zeichnung näher erläutert, in der ein Ausführungsbeispiel dargestellt ist.

Es zeigt:
- Fig. 1: in schematischer Perspektivansicht ein erstes Ausführungsbeispiel der erfin- dungsgemäßen Einrichtung in Form einer Schelle ohne das Kontaktelement,
- Fig. 2: in schematischer Darstellung eine An- sicht auf die radiale Innenfläche der Einrichtung gemäß Fig. 1 mit dem Kon- taktelement,
- Fig. 3: einen Schnitt entlang einer Linie III- III in Fig. 2,
- Fig. 4: in schematischer Perspektivansicht die Einrichtung gemäß Fig. 1 in Montageposi- tion,
- Fig. 5: in stark schematisierter Darstellung einen Radialschnitt durch die Einrich- tung in Montageposition,
- Fig. 6-8: in stark schematisierter Darstellung verschiedene Ausführungsformen von Quer- schnitten des Kontaktelementes,
- Fig. 9: in gleicher Darstellung wie Fig. 5 ein Beispiel einer Einrichtung, das nicht von der Erfindung umfaßt ist,
- Fig. 10: in stark schematisierter Darstellung eine Draufsicht auf ein weiteres Aus- führungsbeispiel eines Kontaktelementes aus profiliertem Blech,
- Fig. 11: eine Seitenansicht auf die Schmalseite des Kontaktelementes gemäß Fig. 10 und
- Fig. 12: stark schematisiert einen Axialschnitt durch ein mit einem Kontaktelement gemäß Fig. 10 versehenes drittes Ausführungs- beispiel einer erfindungsgemäßen Ein- richtung in Montageposition.

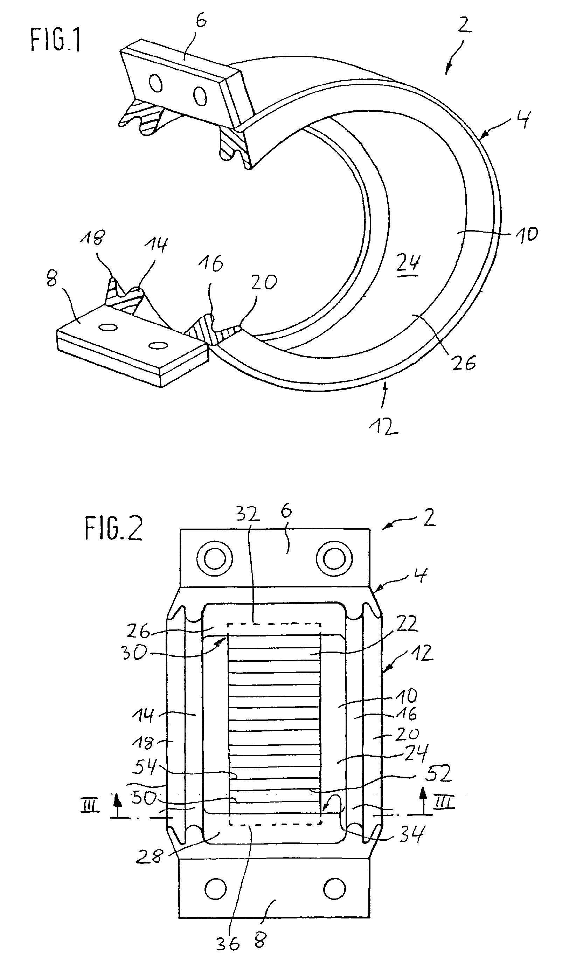

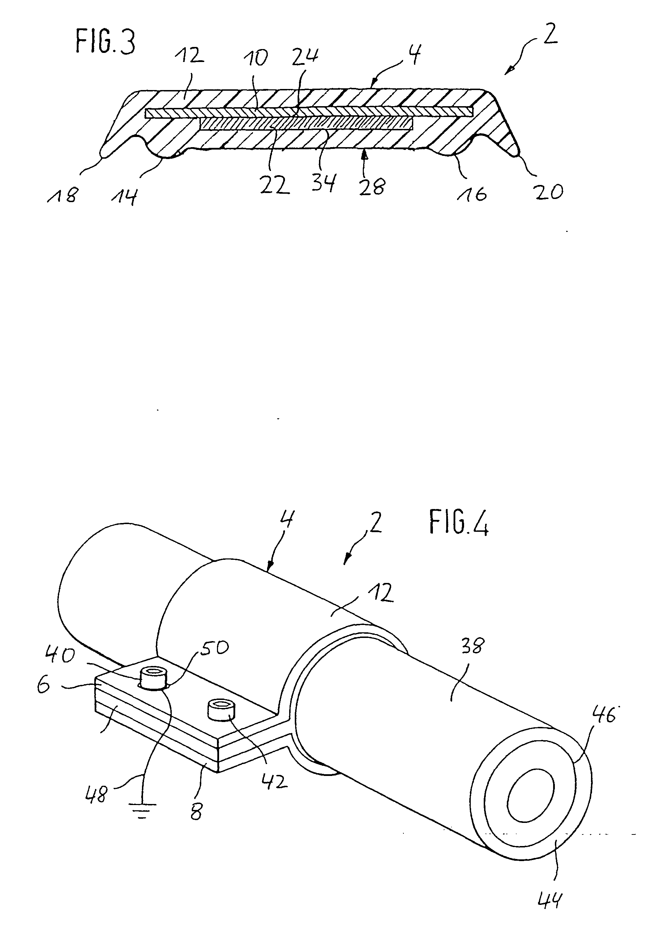

In Fig. 1 ist ein erstes Ausführungsbeispiel einer erfindungsgemäßen Einrichtung 2 dargestellt, die einen als Schelle ausgebildeten biegsamen Grundkörper 4 aufweist, der bei diesem Ausführungsbeispiel einteilig und in Umfangsrichtung offen ausgebildet ist und an seinen freien Enden abgewinkelte Laschen 6, 8 aufweist, die in Montageposition in weiter unten anhand von Fig. 4 näher erläuterter Weise miteinander verbindbar sind.

Der Grundkörper 4 weist ein Trägerelement 10 aus Metall sowie ein Teil 12 aus elastischem Material auf, das bei diesem Ausführungsbeispiel aus einem Elastomer, beispielsweise vulkanisiertem Kautschuk oder einem thermoplastischen Elastomer, besteht. Das Trägerelement 10 ist mit seinen axialen Rändern in das Teil 12 aus elastischem Material eingebettet und so fest mit diesem verbunden (vgl. Fig. 3).

Das Teil 12 aus elastischem Material bildet an der in Montageposition einem zu kontaktierenden Körper zugewandten Seite des Grundkörpers 4 radial nach innen vorspringende Dichtlippen 14, 16 sowie in Axialrichtung außen von den Dichtlippen 14, 16 weitere Dichtlippen 18, 20. In Montageposition liegt der Grundkörper 4 in weiter unten anhand von Fig. 4 näher erläuterter Weise mit den Dichtlippen 14, 16 sowie den weiteren Dichtlippen 18, 20 dichtend an einer Außenfläche des zu kontaktierenden Körpers an, so daß ein in Montageposition zwischen dem zu kontaktierenden Körper und dem Grundkörper 4 gebildeter Raum gegen Eindringen von Luft und/oder Feuchtigkeit abgedichtet ist.

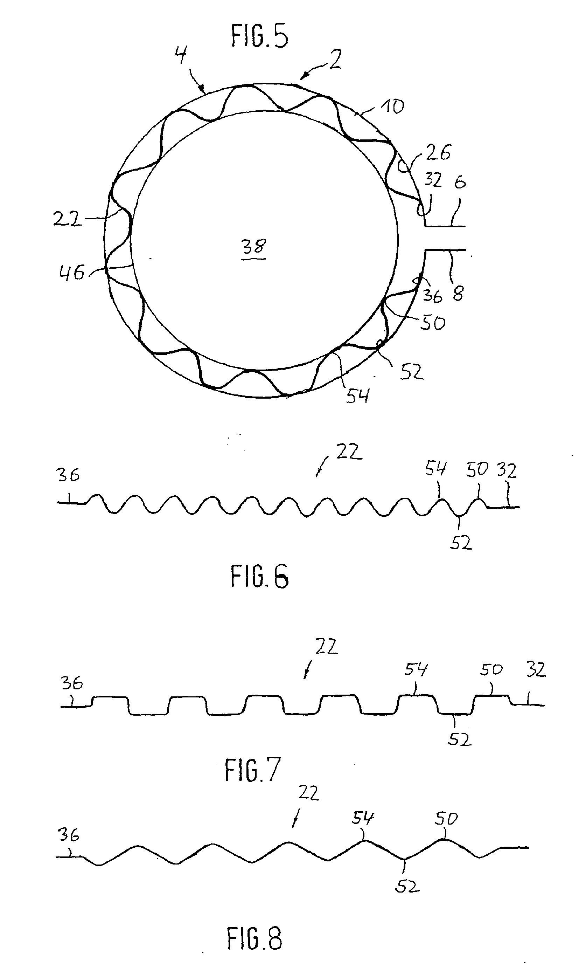

In Fig. 2 ist die Einrichtung 2 mit einem Kontaktelement 22 dargestellt, das erfindungsgemäß aus profiliertem Blech besteht und an der radialen Innenfläche 24 des Trägerelementes 10 an dem Grundkörper 4 gehalten ist. Das Kontaktelement 22 ist bei diesem Ausführungsbeispiel im wesentlichen wellenförmig bzw. mäanderförmig profiliert, wie dies weiter unten anhand von Fig. 5 näher erläutert wird.

Zum Halten des Kontaktelementes 22 an der radialen Innenfläche 24 des Trägerelementes 10 sind Haltemittel vorgesehen, die bei diesem Ausführungsbeispiel Halteteile 26, 28 aufweisen, die aus dem gleichen elastischen Material bestehen wie die Dichtlippen 14 bis 20 und das Teil 12 und die in Axialrichtung des Grundkörpers 4 innen an die Dichtlippen 14, 16 angeformt sind.

Das Halteteil 26 ist bei diesem Ausführungsbeispiel als flacher Streifen aus Elastomer ausgebildet, wobei zwischen einander zugewandten Flächen des Halteteiles 26 und des Trägerelementes 10 des Grundkörpers 4 eine taschenförmige Aufnahme 30 gebildet ist, in der ein freies Ende 32 des Kontaktelementes 22 aufnehmbar ist. In entsprechender Weise ist das Halteteil 28 durch einen flachen Streifen aus Elastomer gebildet, wobei zwischen einander zugewandten Flächen des Halteteiles 28 und des Trägerelementes 10 des Grundkörpers 4 eine taschenförmige Aufnahme 34 zur Aufnahme eines dem freien Ende 32 gegenüberliegenden freien Endes 36 des Kontaktelementes 22 gebildet ist. In Montageposition ist das Kontaktelement 22 mit seinen Enden 32, 36 eng in den taschenförmigen Aufnahmen 30, 34 aufgenommen und so an dem Grundkörper 4 gehalten.

Zur Befestigung des Kontaktelementes 22 an dem Grundkörper 4 wird dieses zunächst mit seinem Ende 32 in Fig. 1 nach oben in die taschenförmige Aufnahme 30 geschoben. Daran anschließend wird das Kontaktelement 22 mit seinem gegenüberliegenden Ende 36 unter elastischer Verformung in Fig. 1 nach unten in die taschenförmige Aufnahme 34 verschoben.

Aus Fig. 3, die einen Schnitt entlang einer Linie III-III in Fig. 2 zeigt, ist ersichtlich, daß die taschenförmige Aufnahme 34 zu dem freien Ende 36 des Kontaktelementes 22 im wesentlichen komplementär ausgebildet ist.

Fig. 4 zeigt die Einrichtung 2 in Montageposition, in der der Grundkörper 4 den zu kontaktierenden Körper, bei diesem Ausführungsbeispiel ein Koaxialkabel, muffenförmig umgreift.

Vor der Befestigung der erfindungsgemäßen Einrichtung 2 an dem Koaxialkabel 38 wird zunächst dessen Außenleiter 46, der das zu kontaktierende elektrisch leitende Teil des Koaxialkabels 38 bildet, durch Entfernen der Ummantelung 44, in dem Bereich, in dem sich in Montageposition das Kontaktelement 22 befindet, abisoliert.

Zur Befestigung der Einrichtung 2 an dem Koaxialkabel 38 wird der als Schelle ausgebildete Grundkörper 4 um das zu kontaktierende Koaxialkabel 38 herum mittels Schrauben 40, 42 aus Metall gespannt, die sich durch in der Lasche 6 gebildete Durchgangsbohrungen erstrecken und in in der Lasche 8 gebildete Gewindebohrungen eingreifen.

Beim Spannen des Grundkörpers 4 gelangen die Dichtlippen 14, 16 und die weiteren Dichtlippen 18, 20 entfernt von dem Kontaktelement 22 dichtend an der Ummantelung 44 des Koaxialkabels 38 zur Anlage, so daß sie den in Montageposition zwischen dem Koaxialkabel 38 und dem Grundkörper 4 gebildeten Raum gegen ein Eindringen von Luft und/oder Feuchtigkeit abdichten.

Beim Spannen des Grundkörpers 4 gelangt ferner das Kontaktelement 22 unter elastischer Verformung einerseits an dem zuvor abisolierten Außenleiter 46 des Koaxialkabels 38 und andererseits an der radialen Innenfläche 26 des Trägerelementes 10 des Grundkörpers 4 zur Anlage. Auf diese Weise ist über das Kontaktelement 22 eine elektrisch leitende Verbindung zwischen dem Außenleiter 46 und dem Trägerelement 10 des Grundkörpers 4 hergestellt. Da sich das Trägerelement 10 bis in die Laschen 6, 8 erstreckt, ist mittels der Schrauben 40, 42 eine elektrisch leitende Verbindung zu einem Leiter, beispielsweise einem Erdungskabel 48, herstellbar. Hierzu kann das Erdungskabel 48 mittels einer Anschlußöse 50 mit einer der Schrauben 40, 42 verbunden sein.

Es ist somit in der gewünschten Weise eine elektrisch leitende Verbindung zwischen dem Erdungskabel 48 und dem Außenleiter 46 des Koaxialkabels 38 hergestellt, so daß der Außenleiter 46 geerdet ist.

Fig. 5 zeigt stark schematisiert einen Radialschnitt durch die Einrichtung 2 in Montageposition, und zwar in Axialrichtung in einem Bereich, in dem das Kontaktelement 22 an dem Außenleiter 46 anliegt. Aus dieser Figur ist ersichtlich, daß das Kontaktelement 22 im wesentlichen mäanderförmig bzw. wellenförmig profiliert ist. Durch die Profilierung des Bleches, aus dem das Kontaktelement 22 besteht, sind aufeinanderfolgende Vorsprünge in Form von im Querschnitt bogenförmigen Wellenbergen und Wellentälern gebildet, von denen in Fig. 5 lediglich drei Vorsprünge mit den Bezugszeichen 50, 52 und 54 versehen sind. Mit den aufeinanderfolgenden Vorsprüngen 50, 52, 54 liegt das Kontaktelement 22 abwechselnd an dem abisolierten Außenleiter 46 des Koaxialkabels 38 und der radialen Innenfläche 26 des Trägerelementes 10 des Grundkörpers 4 an. Auf diese Weise ist eine sichere elektrisch leitende Verbindung zwischen dem Außenleiter 46 und dem Trägerelement 10 und damit über die Laschen 6, 8 auch mit dem Erdungskabel 48 hergestellt.

Das Kontaktelement 22 besteht bei diesem Ausführungsbeispiel aus dünnem Metallblech ist daher elastisch verformbar, so daß das Kontaktelement 22 in Montageposition der Einrichtung 2 elastisch federnd an dem Außenleiter 46 und der radialen Innenfläche 26 des bandförmigen Metallteiles 10 anliegt.

Wie aus Fig. 5 ersichtlich ist, ist das Kontaktelement 22 bei diesem Ausführungsbeispiel in seiner Längsrichtung, also in Umfangsrichtung des Grundkörpers 4 im wesentlichen gleichmäßig profiliert. Auf diese Weise ist in Montageposition der Einrichtung 2 eine in Umfangsrichtung des Koaxialkabels 48 stark ungleichmäßige Belastung von dessen Außenleiter 46 vermieden, die bei einem HF-Kabel zu unerwünschten Reflektionen eines über das Kabel übertragenen elektrischen Signals führen könnte. Hierbei ist die Belastung des Außenleiters 46 in Umfangsrichtung umso gleichmäßiger, je geringer der Abstand in Umfangsrichtung der Wellenberge der Profilierung des Kontaktelementes 22 ist.

Das aus profiliertem Blech bestehende Kontaktelement 22 ist einfach und kostengünstig herstellbar sowie leicht konfektionierbar. Auf diese Weise ist die Herstellung der erfindungsgemäßen Einrichtung 2 einfach und damit kostengünstig gestaltet.

Die Profilierung des Kontaktelementes 22 ist in weiten Grenzen wählbar. Die Figuren 6-8 zeigen Beispiele für verschiedene Profilierungen, wobei in den Figuren 6 und 7 die Profilierung des Kontaktelementes 22 im Querschnitt im wesentlichen mäanderförmig und in Fig. 8 im wesentlichen zickzackförmig ausgebildet ist.

In den Figuren 6-8 ist angedeutet, daß die Enden 32, 36 des Kontaktelementes 22 unprofiliert sind, um das Einsetzen der Enden 32, 36 in die taschenförmigen Ausnehmungen 30, 32 zu erleichtern. Falls das Kontaktelement 22 beispielsweise aus durchgehend profilierter Meterware besteht, so können die Enden 32, 36 des Kontaktelementes 22 nach dessen Konfektionierung abgeflacht werden.

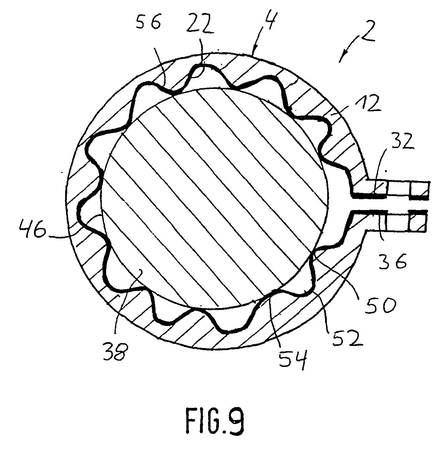

In Fig. 9 ist ein Beispiel einer Einrichtung 2 dargestellt, das nicht von der Erfindung umfaßt ist und sich von dem Ausführungsbeispiel gemäß Fig. 1 im wesentlichen dadurch unterscheidet, daß der Grundkörper 4 vollständig aus elastischem Material besteht. Der Grundkörper 4 weist auf seiner dem Kontaktelement 22 zugewandten Seite eine Anlagefläche 56 für das Kontaktelement 22 auf, die zu der Profilierung des Kontaktelementes 22 im wesentlichen komplementär geformt ist, so daß, wie aus Fig. 9 ersichtlich ist, das Kontaktelement 22 in Umfangsrichtung im wesentlichen über seine gesamte Länge an der Anlagefläche 56 anliegt. Das Kontaktelement 22 ist mit dem elastischen Material des Grundkörpers 4 in Umfangsrichtung umspritzt und so mit dem elastischen Material fest verbunden.

Wie aus Fig. 9 ferner ersichtlich ist, erstreckt sich das Kontaktelement 22 bis in die Laschen 6, 8. Hierbei sind in dem Ende 32 des Kontaktelementes 22 Durchgangsbohrungen und in dem Ende 36 Gewindebohrungen gebildet, in die zum Spannen des Grundkörpers 4 in Montageposition in Fig. 9 nicht dargestellte Schrauben aus Metall einschraubbar sind, wie dies für das Ausführungsbeispiel gemäß Fig. 1 in Fig. 4 dargestellt ist. Über die Schrauben aus Metall ist eine elektrisch leitende Verbindung zwischen einem in Fig. 9 nicht dargestellten Erdungskabel und dem Kontaktelement 22 und damit dem zu kontaktierenden Außenleiter 46 hergestellt.

Die Ausführungsform der Fig. 9 ist im Vergleich zu der Ausführungsform gemäß Fig. 5 einfacher herstellbar, da ein separates Trägerelement nicht mehr erforderlich ist. Das Kontaktelement 22 selbst bildet vielmehr das Trägerelement.

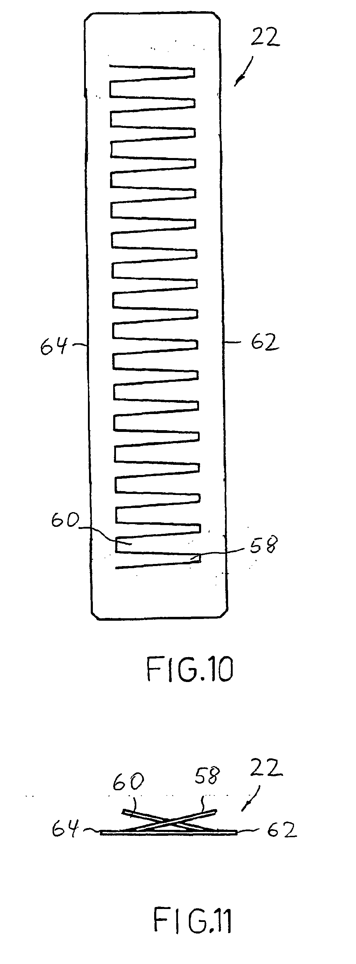

In Fig. 10 ist ein weiteres Ausführungsbeispiel eines erfindungsgemäßen Kontaktelementes 22 aus profiliertem Blech dargestellt, bei dem die Profilierung des Bleches durch in Längsrichtung des Kontaktelementes 22 aufeinanderfolgende, zungenartige Vorsprünge gebildet sind, von denen in Fig. 10 lediglich zwei Vorsprünge mit den Bezugszeichen 58, 60 bezeichnet sind. Die zungenartigen Vorsprünge 58, 60 sind einstückig mit dem Blech des Kontaktelementes 22 ausgebildet und bei diesem Ausführungsbeispiel aus dem Blech ausgestanzt.

Wie aus Fig. 10 ersichtlich ist, sind die zungenartigen Vorsprünge 58, 60 in der Draufsicht im wesentlichen trapezförmig ausgebildet. In Längsrichtung des Kontaktelementes 22 aufeinanderfolgende Vorsprünge 58, 60 erstrecken sich hierbei abwechselnd aus dem Bereich gegenüberliegender Längsränder 62, 64 des Kontaktelementes 22 in Richtung auf den jeweils anderen Längsrand 64 bzw. 62, und und zwar im wesentlichen quer zur Längsrichtung des Kontaktelementes 22.

Fig. 11 zeigt eine Seitenansicht auf die Schmalseite des Kontaktelementes 22 gemäß Fig. 10.

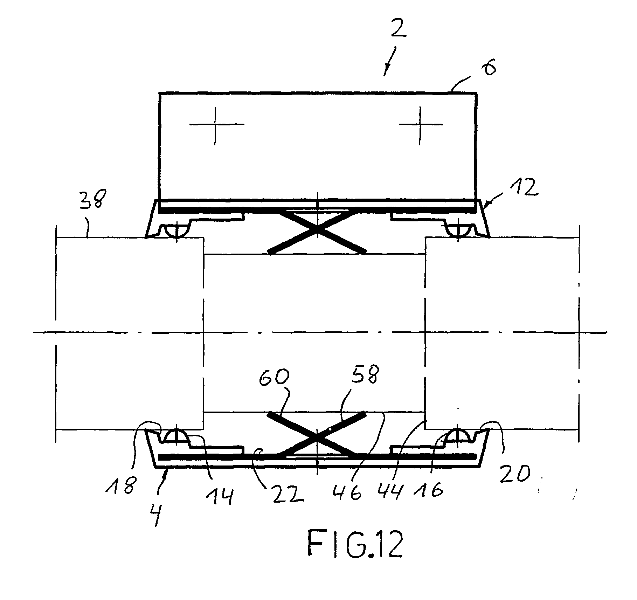

Aus Fig. 12, die stark schematisiert einen Axialschnitt durch eine mit dem Kontaktelement 22 gemäß Fig. 10 versehene erfindungsgemäße Einrichtung 2 zeigt, ist ersichtlich, daß die zungenartigen Vorsprünge 58, 60 in Montageposition der Einrichtung 2 zu dem zu kontaktierenden Körper, in Fig. 12 dem abisolierten Außenleiter 46 des Koaxialkabels 38, hin vorstehen und an diesem anliegen, so daß zwischen dem Außenleiter 46 und dem Kontaktelement 22 und damit dem mit der Lasche 6 verbundenen, in Fig. 12 nicht dargestellten Erdungskabel eine elektrisch leitende Verbindung hergestellt ist. Der Außenleiter 46 ist damit in der gewünschten Weise geerdet.

Die Vorsprünge 58, 60 sind elastisch verformbar ausgebildet, so daß sie in Montageposition der Einrichtung 2 elastisch federnd an dem Außenleiter 46 anliegen. Dadurch ist auch bei größeren Bauteiltoleranzen oder einer im Laufe der Zeit auftretenden Materialermüdung ein sicherer elektrischer Kontakt zu dem Außenleiter 46 gewährleistet.

## Patentansprüche

1. Einrichtung zum elektrisch leitenden Kontaktieren eines elektrisch leitenden Teiles eines insbesondere länglichen, beispielsweise im wesentlichen zylindrischen Körpers, beispielsweise eines Rohres oder eines Kabels,
mit einem Grundkörper (4) zur Anlage an dem zu kontaktierenden Körper, wobei der Grundkörper (4) ein Trägerelement (10) aus Metall aufweist, an dem ein Kontaktelement (22) in Montageposition der Einrichtung (2) anliegt und an dem das Kontaktelement (22) gehalten ist, und
wobei der Grundkörper (4) wenigstens teilweise aus elastischem Material besteht oder ein Teil (12) aus elastischem Material aufweist,
mit einem an einer in Montageposition dem zu kontaktierenden Körper zugewandten Seite des Grundkörpers (4) gehaltenen separaten Kontaktelement (22) zur Herstellung einer elektrisch leitenden Verbindung mit dem elektrisch leitenden Teil des zu kontaktierenden Körpers,
**dadurch gekennzeichnet,**
**daß** das Kontaktelement (22) aus profiliertem Blech besteht und
**daß** an das elastische Material (12) des Grundkörpers (4) angeformte Haltemittel vorgesehen sind, die das Kontaktelement (22) an wenigstens zwei gegenüberliegenden Bereichen seines Randes auf seiner dem Grundkörper (4) abgewandten Seite im wesentlichen formschlüssig übergreifen und so an dem Grundkörper (4) halten

2. Einrichtung nach Anspruch 1, **dadurch gekennzeichnet, daß** das Kontaktelement (22) im wesentlichen wellenförmig oder mäanderförmig oder zickzackförmig profiliert ist.

3. Einrichtung nach Anspruch 2, **dadurch gekennzeichnet, daß** die Profilierung des Kontaktelementes (22) aus aufeinanderfolgenden, im Querschnitt runden, bogenförmigen, dreieckförmigen oder trapezförmigen Wellenbergen und Wellentälern besteht.

4. Einrichtung nach Anspruch 1, **dadurch gekennzeichnet, daß** die Profilierung im wesentlichen über die gesamte Länge des Kontaktelementes (22) gleichmäßig ausgebildet ist.

5. Einrichtung nach Anspruch 1 oder 4, **dadurch gekennzeichnet, daß** das Kontaktelement (22) in Längsrichtung an seinen Enden (32, 36) unprofiliert ausgebildet oder an diesen Enden abgeflacht ist.

6. Einrichtung nach Anspruch 1, **dadurch gekennzeichnet, daß** das Trägerelement (10) im wesentlichen bandförmig ausgebildet ist.

7. Einrichtung nach Anspruch 6, **dadurch gekennzeichnet, daß** das Trägerelement (10) fest mit dem Teil (12) aus elastischem Material verbunden ist oder daß das Trägerelement (10) wenigstens teilweise mit dem elastischen Material (12) des Grundkörpers (4) beschichtet ist, insbesondere auf seiner in Montageposition dem zu kontaktierenden Körper abgewandten Seite, oder in das elastische Material (12) des Grundkörpers (4) eingebettet ist, wobei an der in Montageposition dem zu kontaktierenden Körper zugewandten Seite des Trägerelementes (10) eine Kontaktfläche für das Kontaktelement (22) freigelassen ist.

8. Einrichtung nach Anspruch 1, **dadurch gekennzeichnet, daß** durch die Profilierung des Kontaktelementes (22) in einer ersten Richtung des Kontaktelementes (22), vorzugsweise in dessen Längsrichtung, aufeinanderfolgende Vorsprünge (50, 52, 54; 58, 60) gebildet sind, mit denen das Kontaktelement (22) in Montageposition der Einrichtung (2) an an dem elektrisch leitenden Teil des zu kontaktierenden Körpers (10) anliegt, derart, daß zwischen dem elektrisch leitenden Teil des zu kontaktierenden Körpers und dem Trägerelement (10) des Grundkörpers (14) eine elektrisch leitende Verbindung hergestellt ist.

9. Einrichtung nach Anspruch 8, **dadurch gekennzeichnet, daß** die Vorsprünge (58, 60) zungenartig ausgebildet sind und in Montageposition der Einrichtung (2) zu dem zu kontaktierenden Körper hin vorstehen.

10. Einrichtung nach Anspruch 9, **dadurch gekennzeichnet, daß** die zungenartigen Vorsprünge (58, 60) einstükkig mit dem Blech des Kontaktelementes (22) ausgebildet sind.

11. Einrichtung nach Anspruch 9, **dadurch gekennzeichnet, daß** die zungenartigen Vorsprünge (58, 60) aus dem Blech des Kontaktelementes (22) ausgeschnitten, ausgestanzt oder ausgeätzt sind.

12. Einrichtung nach Anspruch 9, **dadurch gekennzeichnet, daß** die zungenartigen Vorsprünge (58, 60) in der Draufsicht im wesentlichen dreieckförmig oder trapezförmig ausgebildet sind.

13. Einrichtung nach Anspruch 9, **dadurch gekennzecinnet, daß** die in der ersten Richtung aufeinanderfolgenden Vorsprünge (58, 60) sich abwechselnd aus dem Bereich gegenüberliegender Ränder (62, 64) des Kontaktelementes (22) in Richtung auf den jeweils anderen Rand (64 bzw. 62) erstrecken.

14. Einrichtung nach Anspruch 9, **dadurch gekennzeichnet, daß** sich die Vorsprünge (58, 60) in der Draufsicht in einer zu der ersten Richtung im wesentlichen senkrechten zweiten Richtung erstrecken.

15. Einrichtung nach Anspruch 8, **dadurch gekennzeichnet, daß** das Kontaktelement in Montageposition der Einrichtung (2) mit seinen Vorsprüngen, vorzugsweise abwechselnd, an dem zu kontaktierenden Körper und dem Trägerelement anliegt.

16. Einrichtung nach Anspruch 1, **dadurch gekennzeichnet, daß** das Kontaktelement (22) oder wenigstes die Vorsprünge (50, 52, 54; 58, 60) elastisch verformbar ausgebildet ist, derart, daß das Kontaktelement (22) bzw. die Vorsprünge (50, 52, 54; 58, 60) des Kontaktelementes (22) in Montageposition der Einrichtung (2) elastisch federnd an dem zu kontaktierenden Körper anliegt bzw. anliegen.

17. Einrichtung nach Anspruch 1, **dadurch gekennzeichnet, daß** das Kontaktelement (22) lösbar mit dem Grundkörper (4) verbunden ist.

18. Einrichtung nach Anspruch 1, **dadurch gekennzeichnet, daß** die Haltemittel wenigstens ein an das elastische Material des Grundkörpers (4) angeformtes Halteteil (26) aufweisen, das sich von einem Rand des Kontaktelementes (22) bis zu dem gegenüberliegenden Rand des Kontaktelementes (22) erstreckt, derart, daß das Halteteil (26) das Kontaktelement auf seiner dem Grundkörper (4) abgewandten Seite übergreift und so an dem Grundkörper (4) hält.

19. Einrichtung nach Anspruch 18, **dadurch gekennzeichnet, daß** das Halteteil (26) eine im wesentlichen taschenförmige Aufnahme (30) für das Kontaktelement (22) bildet.

20. Einrichtung nach Anspruch 19, **dadurch gekennzeichnet, daß** das Halteteil (26) eine Ausnehmung aufweist, die die taschenförmige Aufnahme (30) bildet.

21. Einrichtung nach Anspruch 19, **dadurch gekennzeichnet, daß** die taschenförmige Aufnahme (30) zwischen einander zugewandten Flächen des Halteteiles (26) und des Grundkörpers (4) gebildet ist.

22. Einrichtung nach einem der Ansprüche 18 bis 21, **dadurch gekennzeichnet, daß** die Haltemittel zwei zueinander beabstandete Halteteile (26, 28) aufweisen, die einander zugewandte taschenförmige Aufnahmen (30, 34) zur Aufnahme gegenüberliegender Enden (32, 36) des Kontaktelementes (22) aufweisen.

23. Einrichtung nach Anspruch 20, **dadurch gekennzeichnet, daß** die Ausnehmung zu dem zugeordneten Ende des Kontaktelementes (22) im wesentlichen komplementär geformt ist.

24. Einrichtung nach Anspruch 18, **dadurch gekennzeichnet, daß** wenigstens ein Halteteil als flacher Streifen ausgebildet ist, der das Kontaktelement (22) entfernt von dessen Enden übergreift.

25. Einrichtung nach einem der Ansprüche 1 bis 28, **dadurch gekennzeichnet, daß** die Haltemittel entfernt von der taschenförmigen Aufnahme oder den taschenförmigen Aufnahmen (30, 34) wenigstens einen an das elastische Material (12) des Grundkörpers (4) angeformten Steg aufweisen, an dem das Kontaktelement (22) anliegt.

26. Einrichtung nach Anspruch 25, **dadurch gekennzeichnet, daß** wenigstens zwei Stege vorgesehen sind, an denen das Kontaktelement (22) mit gegenüberliegenden Bereichen seines Randes anliegt.

27. Einrichtung nach Anspruch 1, **dadurch gekennzeichnet, daß** das Kontaktelement (22) langgestreckt ausgebildet ist.

28. Einrichtung nach Anspruch 22, **dadurch gekennzeichnet, daß** in Montageposition der Einrichtung (2) das Kontaktelement (22) in Längsrichtung an seinen Enden (32, 36) in den taschenförmigen Aufnahmen (30, 34) aufgenommen ist.

29. Einrichtung nach Anspruch 25 oder 26, **dadurch gekennzeichnet, daß** das Kontaktelement (22) an einer seiner Längskanten bzw. an seinen beiden Längskanten an dem Steg bzw. den Stegen anliegt.

30. Einrichtung nach Anspruch 1, **dadurch gekennzeichnet, daß** der Grundkörper (4) biegsam ausgebildet ist.

31. Einrichtung nach Anspruch 1, **dadurch gekennzeichnet, daß** der Grundkörper (4) derart ausgebildet ist, daß er in Montageposition den zu kontaktierenden Körper ringförmig oder muffenförmig umgreift.

32. Einrichtung nach Anspruch 1, **dadurch gekennzeichnet, daß** der Grundkörper (4) einteilig und in Umfangsrichtung offen ausgebildet ist und an seinen freien Enden abgewinkelte oder abgebogene Laschen (6, 8) aufweist, die in Montageposition miteinander verbindbar sind, vorzugsweise mittels einer Schraubvorrichtung oder einer Klemmvorrichtung.

33. Einrichtung nach Anspruch 1, **dadurch gekennzeichnet, daß** der Grundkörper (4) als um den zu kontaktierenden Körper spannbare Schelle ausgebildet ist.

34. Einrichtung nach Anspruch 1, **dadurch gekennzeichnet, daß** das Trägerelement (10) wenigstens einen Durchbruch, vorzugsweise beiderseits des Kontaktelementes (22) wenigstens einen Durchbruch, aufweist, durch den bzw. durch die sich das elastische Material (12) erstreckt, derart, daß das elastische Material (12) auf der dem Kontaktelement (22) zugewandten Seite des Trägerelementes (10) mit dem elastischen Material auf der dem Kontaktelement (22) abgewandten Seite des Trägerelementes (10) verbunden ist.

35. Einrichtung nach Anspruch 1, **dadurch gekennzeichnet, daß** die Einrichtung (2) Dichtmittel zum Abdichten eines in Montageposition zwischen dem zu kontaktierenden Körper und dem Grundkörper (4) gebildeten Raumes gegen ein Eindringen von Luft und/oder Feuchtigkeit aufweist.

36. Einrichtung nach Anspruch 35, **dadurch gekennzeichnet, daß** die Dichtmittel an einer in Montageposition dem zu kontaktierenden Körper zugewandten Seite des Grundkörpers (4) angeordnete, quer zur Längsrichtung des Grundkörpers (4) bzw. in dessen Axialrichtung zueinander beabstandete Dichtlippen (14, 16, 18, 20) aus elastischem Material aufweisen, die sich in Längsrichtung des Grundkörpers (4) bzw. in dessen Umfangsrichtung erstrecken, vorzugsweise im wesentlichen über die gesamte Länge des Grundkörpers (4) in dieser Richtung, und die in Montageposition der Einrichtung (2) dichtend an dem zu kontaktierenden Körper (38) anliegen.

37. Einrichtung nach Anspruch 36, **dadurch gekennzeichnet, daß** die Haltemittel an die Dichtlippen (14, 16, 18, 20) angeformt sind.

38. Einrichtung nach Anspruch 1, **dadurch gekennzeichnet, daß** der Grundkörper (4) im wesentlichen vollständig aus dem elastischen Material besteht.

39. Einrichtung nach Anspruch 1, **dadurch gekennzeichnet, daß** das Kontaktelement (22) fest mit dem elastischen Material des Grundkörpers (4) verbunden ist.

40. Einrichtung nach Anspruch 1, **dadurch gekennzeichnet, daß** das elastische Material des Grundkörpers (4) auf seiner dem Kontaktelement (22) zugewandten Seite eine Anlagefläche (56) für das Kontaktelement (22) aufweist, die zu dem Querschnitt des Kontaktelementes (22) im wesentlich komplementär geformt ist, derart, daß das Kontaktelement (22) im wesentlichen über seine gesamte Länge an dem elastischen Material des Grundkörpers (4) anliegt.

41. Einrichtung nach Anspruch 1, **dadurch gekennzeichnet, daß** das Kontaktelement (22) mit dem elastischen Material des Grundkörpers (4) umspritzt ist.

42. Einrichtung nach Anspruch 32, **dadurch gekennzeichnet, daß** sich das Kontaktelement (22) bis in die Laschen (6, 8) erstreckt.

43. Einrichtung nach Anspruch 1 oder 36, **dadurch gekennzeichnet, daß** das elastische Material (12) des Grundkörpers (4) und/oder der Dichtlippen (14, 16, 18, 20) durch ein Elastomer, insbesondere vulkanisierten Kautschuk und/oder ein thermoplastisches Elastomer, gebildet ist.

## Claims

1. Device for forming an electrically conductive contact with an electrically conductive component of a particularly elongated body, for example a substantially cylindrical body, for example a pipe or a cable,
comprising a basic body (4) for arranging on the body to be contacted, wherein the basic body (4) comprises a support element (10) made of metal, on which a contact element (22) bears in the assembly position of the device (2) and on which the contact element (22) is held, and
wherein the basic body (4) is made at least partly from an elastic material or comprises one element (12) made from elastic material,
with a separate contact element (22) held on a side of the basic body (4) facing in assembly position the body to be contacted for producing an electrically conducting connection with the electrically conducting part of the body to be contacted
**characterised in that**
the contact element (22) is made of profiled sheet metal and
**in that** holding means formed onto the elastic material (12) of the basic body (4) are provided, which grip over the contact element (22) on at least two opposite areas of its edge on its side facing away from the basic body (4) in a substantially form-fitting manner and thus hold onto the basic body (4).

2. Device according to claim 1, **characterised in that** the contact element (22) is profiled with a substantially wave-shaped or meandering or zig-zag-shaped profile.

3. Device according to claim 2, **characterised in that** the profiling of the contact element (22) is comprised of serially arranged wave peaks and wave troughs having shapes, in cross-section, which are round, arcuate shaped, triangular or trapezoidal.

4. Device according to claim 1, **characterised in that** the profiling of the contact element (22) is substantially uniform over the entire length of the contact element.

5. Device according to claim 1 or 4, **characterised in that** the contact element (22) is configured in the longitudinal direction, at its ends (32, 36), in an unprofiled manner or is flattened at these ends.

6. Device according to claim 1, **characterised in that** the support element (10) is designed to be substantially band-shaped.

7. Device according to claim 6, **characterised in that** the support element (10) is firmly connected with the component (12) made of elastic material or **in that** the support element (10) is coated at least partially with the elastic material (12) of the basic body (4), in particular, on its side turned away from the body to be contacted in the assembly position or is embedded in the elastic material (12) of the basic body (4), wherein on the side of the support element (10) facing the body to be contacted in the assembly position a contact surface is left free for the contact element (22).

8. Device according to claim 1, **characterised in that** by means of the profiling of the contact element (22) in a first direction of the contact element (22), preferably in its longitudinal direction, serially arranged projections (50, 52, 54; 58, 60) are formed, with which the contact element (22) in the assembly position of the device (2) is in contact with the electrically conductive part of the body (10) to be contacted, such that an electrically conductive connection is formed between the electrically conducting part of the body to be contacted and the support element (10) of the basic body (14).

9. Device according to claim 8, **characterised in that** the projections (58, 60) are designed to be in tongue-like and in the assembly position of the device (2) extend towards the body to be contacted.

10. Device according to claim 9, **characterised in that** tongue-like projections (58, 60) are designed to be in one piece with the sheet metal of the contact element (22).

11. Device according to claim 9, **characterised in that** the tongue-like projections (58, 60) are cut, stamped or etched out of the metal sheet of the contact element (22).

12. Device according to claim 9, **characterised in that** the tongue-like projections (58, 60) are designed to be substantially triangular-shaped or trapezoidal when viewed in plan view.

13. Device according to claim 9, **characterised in that** the serially arranged projections (58, 60) are arranged in an alternating manner from the region of the opposite edges (62, 64) of the contact element (22) in a direction toward the respective other edge (64 or 62).

14. Device according to claim 9, **characterised in that** the projections (58, 60) in plan view extend in a second direction substantially perpendicular to the first direction.

15. Device according to claim 8, **characterised in that** the contact element, in the assembly position of the device (2) is disposed on the body to be contacted and on the support element with its projections in contact therewith, preferably in an alternating manner.

16. Device according to claim 1, **characterised in that** the contact element (22) or at least the projections (50, 52, 54; 58, 60) are designed to be elastically deformable, such that the contact element (22) or the projections (50, 52, 54; 58, 60) of the contact element (22) are, in the assembly position of the device (2), elastically resiliently biased against the body to be contacted.

17. Device according to claim 1, **characterised in that** the contact element (22) is connected detachably to the basic body (4).

18. Device according to claim 1, **characterised in that** the retaining means comprises at least one retaining element (26) formed on the elastic material of the basic body (4), which extends from one edge of the contact element (22) to the opposite edge of the contact element (22), such that the retaining element (26) grips over the contact element on its side turned away from the basic body (4) and thus holds the contact element on the basic body (4).

19. Device according to claim 18, **characterised in that** the retaining element (26) forms a substantially pocket-shaped mount (30) for the contact element (22).

20. Device according to claim 19, **characterised in that** the retaining element (26) comprises a recess which forms the pocket-shaped mount (30).

21. Device according to claim 19, **characterised in that** the pocket-shaped mount (30) is formed between facing surfaces of the retaining element (26) and the basic body (4).

22. Device according to one of claims 18 to 21, **characterised in that** the retaining elements comprise two spaced-apart retaining elements (26, 28), which together comprise facing pocket-shaped mounts (30, 34) for mounting opposite ends (32, 36) of the contact element (22).

23. Device according to claim 20, **characterised in that** the recess at the assigned end of the contact element (22) is designed to be substantially complementary.

24. Device according to claim 18, **characterised in that** at least one retaining element is designed as a flat strip which grips over the contact element (22) remote from the ends thereof.

25. Device according to any one of claims 1 to 28, **characterised in that** the retaining means remote from the pocket-like mount or pocket-like mounts (30, 34) comprise at least one step on which the contact element (22) is disposed, the step being formed from the elastic material (12) of the basic body (4).

26. Device according to claim 25, **characterised in that** at least two steps are provided on which the contact element (22) is arranged with opposite areas of its edge.

27. Device according to claim 1, **characterised in that** the contact element (22) is configured as an elongated shape.

28. Device according to claim 22, **characterised in that** in the assembly position of the device (2) the contact element (22) is mounted in longitudinal direction at its ends (32, 26) in the pocket-like mounts (30, 34).

29. Device according to claim 25 or 26, **characterised in that** the contact element (22) is disposed on one longitudinal edges or on both of its longitudinal edges on the respective step or steps.

30. Device according to claim 1, **characterised in that** basic body (4) is designed to be bendable.

31. Device according to claim 1, **characterised in that** basic body (4) is configured such that, in the assembly position, it encircles the body to be contacted in a ring-like or sleeve-like manner.

32. Device according to claim 1, **characterised in that** the basic body (4) is configured in one piece and is open in its circumferential direction and comprises, at its free ends, angled or bent interconnecting tabs (6, 8), which can be connected together in the assembly position, preferably by means of a screw device or a clamping device.

33. Device according to claim 1, **characterised in that** the basic body (4) is designed as a collar which can be tensioned around the body to be contacted.

34. Device according to claim 1, **characterised in that** the support element (10) comprises at least one opening, preferably at least one passage on each side of the contact element (22), through which the elastic material (12) extends in such a manner that the elastic material (12) on the respective side of the support element (10) facing toward the contact element (22) is connected to the elastic material on the side of the support element (10) turned away from the contact element (22).

35. Device according to claim 1, **characterised in that** the device (2) comprises sealing means for sealing a space formed in the assembly position between the body to be contacted and the basic body (4) against the entry of air and/or moisture.

36. Device according to claim 35, **characterised in that** the sealing means comprise sealing lips (14, 16, 18, 20) made of elastic material which are disposed on the respective side of the basic body (4) which faces the body to be contacted in the contact mounting position and which are spaced from one another transversely to the longitudinal direction of the basic body (4) or, respectively, in the axial direction of the basic body (4), the sealing lips extending along, preferably, the entire length of the basic body (4) in its longitudinal direction or, respectively, in its circumferential direction, and being disposed, in the contact mounting position of the device (2), in a seal effecting manner on the body (38) to be contacted.

37. Device according to claim 36, **characterised in that** the retaining means are formed on the sealing lips (14, 16, 18, 20).

38. Device according to claim 1, **characterised in that** the basic body (4) is made substantially completely from an elastic material.

39. Device according to claim 1, **characterised in that** the contact element (22) is securely connected to the elastic material of the basic body (4).

40. Device according to claim 1, **characterised in that** the elastic material of the basic body (4) comprises on its side facing the contact element (22) a bearing surface (56) for the contact element (22), which is designed to be substantially complementary to the cross section of the contact element (22) such that the contact element (22) rests essentially over its entire length on the elastic material of the basic body (4).

41. Device according to claim 1, **characterised in that** the contact element (22) is sprayed around with the elastic material of the basic body (4).

42. Device according to claim 32, **characterised in that** the contact element (22) extends into the tabs (6, 8).

43. Device according to claim 1 or 36, **characterised in that** the elastic material (12) of the basic body (4) and/or the sealing lips (14, 16, 18, 20) are formed by an elastomer, in particular vulcanised rubber and/or a thermoplastic elastomer.

## Revendications

1. Dispositif pour la mise en contact électroconductrice d'une partie électroconductrice d'un corps en particulier allongé, par exemple sensiblement cylindrique, par exemple d'un tuyau ou d'un câble,
comprenant un corps de base (4) pour l'appui sur le corps à mettre en contact, le corps de base (4) présentant un élément support (10) en métal, sur lequel un élément de contact (22) s'applique en position de montage du dispositif (2) et sur lequel l'élément de contact (22) est maintenu, et
le corps de base (4) étant au moins en partie à base de matériau élastique ou présentant une partie (12) à base de matériau élastique,
un élément de contact (22) séparé, maintenu sur un côté, tourné vers le corps à mettre en contact en position de montage, du corps de base (4) pour l'établissement d'une liaison électroconductrice avec la partie électroconductrice du corps à mettre en contact,
**caractérisé en ce que**
l'élément de contact (22) est à base de tôle profilée, et
**en ce que** des moyens de retenue formés sur le matériau (12) élastique du corps de base (4) sont prévus, lesquels couvrent essentiellement par complémentarité de formes l'élément de contact (22) sur au moins deux zones opposées de son bord sur son côté opposé au corps de base (4) et le maintiennent ainsi sur le corps de base (4).

2. Dispositif selon la revendication 1, **caractérisé en ce que** l'élément de contact (22) est profilé sensiblement en forme d'onde ou en forme de méandre ou en forme de zigzag.

3. Dispositif selon la revendication 2, **caractérisé en ce que** le profilage de l'élément de contact (22) est constitué de crêtes et de creux successifs, ronds en section, en forme d'arc, triangulaires ou trapézoïdaux.

4. Dispositif selon la revendication 1, **caractérisé en ce que** le profilage est réalisé de façon régulière essentiellement sur toute la longueur de l'élément de contact (22).

5. Dispositif selon la revendication 1 ou 4, **caractérisé en ce que** l'élément support (22) est conçu non profilé dans le sens longitudinal sur ses extrémités (32, 36) ou est aplati sur ses extrémités.

6. Dispositif selon la revendication 1, **caractérisé en ce que** l'élément de contact (10) est conçu essentiellement en forme de bande.

7. Dispositif selon la revendication 6, **caractérisé en ce que** l'élément support (10) est relié fixement à la partie (12) à base de matériau élastique ou **en ce que** l'élément support (10) est recouvert au moins en partie avec le matériau (12) élastique du corps de base (4), en particulier sur son côté opposé au corps à mettre en contact en position de montage, ou est enfoncé dans le matériau (12) élastique du corps de base (4), une surface de contact pour l'élément de contact (22) étant libérée sur le côté, tourné vers le corps à mettre en contact en position de montage, de l'élément support (10).

8. Dispositif selon la revendication 1, **caractérisé en ce que** des saillies (50, 52, 54 ; 58, 60) consécutives sont formées par le profilage de l'élément de contact (22), dans une première direction de l'élément de contact (22), de préférence dans sa direction longitudinale, saillies avec lesquelles l'élément de contact (22) s'applique sur la partie électroconductrice du corps (10) à mettre en contact en position de montage du dispositif (2), de telle sorte qu'une liaison électroconductrice est établie entre la partie électroconductrice du corps à mettre en contact et l'élément support (10) du corps de base (14).

9. Dispositif selon la revendication 8, **caractérisé en ce que** les saillies (58, 60) sont conçues en forme de languettes et dépassent en direction du corps à mettre en contact en position de montage du dispositif (2).

10. Dispositif selon la revendication 9, **caractérisé en ce que** les saillies (58, 60) en forme de languettes sont conçues d'une seule pièce avec la tôle de l'élément de contact (22).

11. Dispositif selon la revendication 9, **caractérisé en ce que** les saillies (58, 60) en forme de languettes sont extraites par découpage, matriçage, ou décapage de la tôle de l'élément de contact (22).

12. Dispositif selon la revendication 9, **caractérisé en ce que** les saillies (58, 60) en forme de languettes sont conçues, en vue de dessus, essentiellement avec une forme de triangle ou une forme de trapèze.

13. Dispositif selon la revendication 9, **caractérisé en ce que** les saillies (58, 60) se succédant dans la première direction s'étendent alternativement à partir de la zone de bords (62, 64) opposés de l'élément de contact (22) en direction de l'autre bord respectif (64 ou 62).

14. Dispositif selon la revendication 9, **caractérisé en ce que** les saillies (58, 60) s'étendent, en vue de dessus, dans une seconde direction sensiblement perpendiculaire à la première direction.

15. Dispositif selon la revendication 8, **caractérisé en ce que** l'élément de contact s'applique, en position de montage du dispositif (2), avec ses saillies, de préférence alternativement, sur le corps à mettre en contact et l'élément support.

16. Dispositif selon la revendication 1, **caractérisé en ce que** l'élément de contact (22) ou au moins les saillies (50, 52, 54 ; 58, 60) et/ou sont déformable(s) élastiquement, de sorte que l'élément de contact (22) ou les saillies (50, 52, 54 ; 58, 60) de l'élément de contact (22) s'applique(nt) en position de montage du dispositif (2) en formant ressort sur le corps à mettre en contact.

17. Dispositif selon la revendication 1, **caractérisé en ce que** l'élément de contact (22) est relié de façon amovible au corps de base (4).

18. Dispositif selon la revendication 1, **caractérisé en ce que** les moyens de retenue présentent au moins une partie de retenue (26) formée sur le matériau élastique du corps de base (4), laquelle partie s'étend depuis un bord de l'élément de contact (22) jusqu'au bord opposé de l'élément de contact (22), de telle sorte que la partie de retenue (26) recouvre l'élément de contact sur son côté opposé au corps de base (4) et le maintient ainsi sur le corps de base (4).

19. Dispositif selon la revendication 18, **caractérisé en ce que** la partie de retenue (26) forme un logement (30) sensiblement en forme de poche pour l'élément de contact (22).

20. Dispositif selon la revendication 19, **caractérisé en ce que** la partie de retenue (26) présente un évidement qui forme le logement (30) en forme de poche.

21. Dispositif selon la revendication 19, **caractérisé en ce que** le logement (30) en forme de poche est formé entre des surfaces tournées les unes vers les autres de la partie de retenue (26) et du corps de base (4).

22. Dispositif selon l'une quelconque des revendications 18 à 21, **caractérisé en ce que** les moyens de retenue présentent deux parties de retenue (26, 28) espacées l'une de l'autre, qui présentent des logements (30, 34) en forme de poche tournés les uns vers les autres pour le logement d'extrémités (32, 36) se faisant face de l'élément de contact (22).

23. Dispositif selon la revendication 20, **caractérisé en ce que** l'évidement est conçu de façon sensiblement complémentaire pour l'extrémité associée de l'élément de contact (22).

24. Dispositif selon la revendication 18, **caractérisé en ce qu'**au moins une partie de retenue est conçue sous forme de bande plate qui recouvre l'élément de contact (22) à distance de ses extrémités.

25. Dispositif selon l'une quelconque des revendications 1 à 28, **caractérisé en ce que** les moyens de retenue présentent à distance du logement en forme de poche ou des logements (30, 34) en forme de poche, au moins une nervure formée sur le matériau (12) élastique du corps de base (4), sur laquelle s'applique l'élément de contact (22).

26. Dispositif selon la revendication 25, **caractérisé en ce qu'**il est prévu au moins deux nervures sur lesquelles s'applique l'élément de contact (22) avec des zones opposées de son bord.

27. Dispositif selon la revendication 1, **caractérisé en ce que** l'élément de contact (22) est conçu de façon étirée en longueur.

28. Dispositif selon la revendication 22, **caractérisé en ce que**, en position de montage du dispositif (2), l'élément de contact (22) est réceptionné dans le sens de la longueur sur ses extrémités (32, 36) dans les logements (30, 34) en forme de poche.

29. Dispositif selon la revendication 25 ou 26, **caractérisé en ce que** l'élément de contact (22) s'applique sur l'une de ses arêtes longitudinales ou sur ses deux arêtes longitudinales sur la nervure ou les nervures.

30. Dispositif selon la revendication 1, **caractérisé en ce que** le corps de base (4) est conçu souple.

31. Dispositif selon la revendication 1, **caractérisé en ce que** le corps de base (4) est conçu de telle sorte que, en position de montage, il entoure le corps à mettre en contact à la façon d'un anneau ou d'un manchon.

32. Dispositif selon la revendication 1, **caractérisé en ce que** le corps de base (4) est conçu d'une seule pièce et ouvert dans le sens périphérique et présente sur ses extrémités libres des pattes (6, 8) coudées ou pliées qui peuvent être reliées les unes aux autres en position de montage, de préférence au moyen d'un dispositif de vissage ou d'un dispositif de serrage.

33. Dispositif selon la revendication 1, **caractérisé en ce que** le corps de base (4) est conçu sous forme de collier pouvant serrer le corps à mettre en contact.

34. Dispositif selon la revendication 1, **caractérisé en ce que** l'élément support (10) présente au moins un passage, de préférence des deux côtés de l'élément de contact (22), à travers lequel le matériau (12) élastique s'étend, de telle sorte que le matériau élastique (12) est relié sur le côté, tourné vers l'élément de contact (22), de l'élément support (10) au matériau élastique sur le côté, opposé à l'élément de contact (22), de l'élément support (10).

35. Dispositif selon la revendication 1, **caractérisé en ce que** le dispositif (2) présente des moyens d'étanchéité pour l'étanchéité d'un espace formé en position de montage entre le corps à mettre en contact et le corps de base (4) contre une pénétration d'air et/ou d'humidité.

36. Dispositif selon la revendication 35, **caractérisé en ce que** les moyens d'étanchéité présentent des lèvres d'étanchéité (14, 16, 18, 20), disposées sur un côté, tourné vers le corps à mettre en contact en position de montage, du corps de base (4), espacées les unes des autres transversalement à la direction longitudinale du corps de base (4) ou dans sa direction axiale, à base de matériau élastique, qui s'étendent dans le sens longitudinal du corps de base (4) ou dans sa direction périphérique, de préférence principalement sur toute la longueur du corps de base (4) dans cette direction, et qui s'appliquent, en position de montage du dispositif (2), de façon étanche sur le corps (38) à mettre en contact.

37. Dispositif selon la revendication 36, **caractérisé en ce que** les moyens de retenue sont formés sur les lèvres d'étanchéité (14, 16, 18, 20).

38. Dispositif selon la revendication 1, **caractérisé en ce que** le corps de base (4) est sensiblement complètement à base du matériau élastique.

39. Dispositif selon la revendication 1, **caractérisé en ce que** l'élément de contact (22) est relié fixement au matériau élastique du corps de base (4).

40. Dispositif selon la revendication 1, **caractérisé en ce que** le matériau élastique du corps de base (4) présente sur son côté tourné vers l'élément de contact (22) une surface d'appui (56) pour l'élément de contact (22), qui est formée de façon pratiquement complémentaire par rapport à la section de l'élément de contact (22), de telle sorte que l'élément de contact (22) s'applique essentiellement sur toute sa longueur sur le matériau élastique du corps de base (4).

41. Dispositif selon la revendication 1, **caractérisé en ce que** l'élément de contact (22) est surmoulé avec le matériau élastique du corps de base (4).

42. Dispositif selon la revendication 32, **caractérisé en ce que** l'élément de contact (22) s'étend jusque dans les pattes (6, 8).

43. Dispositif selon la revendication 1 ou 36, **caractérisé en ce que** le matériau (12) élastique du corps de base (4) et/ou des lèvres d'étanchéité (14, 16, 18, 20) est formé par un élastomère, en particulier du caoutchouc vulcanisé et/ou un élastomère thermoplastique.
